# EUROPÄISCHE PATENTANMELDUNG

(11) **EP 0 766 198 A1**
(43) Veröffentlichungstag der Anmeldung: **02.04.1997**
(21) Anmeldenummer: 95890170.4
(22) Anmeldetag: 26.09.1995
(51) Int. Cl.: G06K 19/06

(54) **Mittels eines IR-Lesegeräts auswerbare Karte**

(71) Anmelder: Loy, Oliver, 6900 Bregenz (AT); Umundum, Dietmar, 6900 Bregenz (AT); Wälde, Axel, 6971 Hard (AT)
(72) Erfinder: Loy, Oliver, 6900 Bregenz (AT); Umundum, Dietmar, 6900 Bregenz (AT); Wälde, Axel, 6971 Hard (AT)
(74) Vertreter: Atzwanger, Richard, Dipl.-Ing. Patentanwalt

(57) **Zusammenfassung**

Wertkarte od. dgl., wie Ticket, welche mittels eines IR-Lesegerätes auswertbar ist, bestehend aus einem kartenförmigen Träger (1) aus steifem Material, welcher über zumindest einen Teil einer seiner beiden Seiten mit einem Barcode (3) versehen ist, wobei zumindest derjenige Bereich, in welchem sich der Barcode (3) befindet, mit einer für optisch wahrnehmbares Licht undurchsichtigen Schichte versehen ist. Dabei ist der Träger (1) aus einem für IR-Licht durchlässigen Material hergestellt.

## Beschreibung

Die gegenständliche Erfindung betrifft eine Wertkarte, wie ein Ticket od. dgl., welche mittels eines IR-Lesegerätes auswertbar ist, bestehend aus einem kartenförmigen Träger aus steifem Material, welcher über zumindest einen Teil einer seiner beiden Seiten mit einem Barcode versehen ist, wobei zumindest derjenige Bereich, in welchem sich der Barcode befindet, mit einer für optisch wahrnehmbares Licht undurchsichtigen Schichte versehen ist.

Es sind Wertkarten od. dgl. bekannt, welche aus einem Träger bestehen, auf welchem sich eine schwarze, für IR-Licht durchlässige Schichte befindet. Derartige Wertkarten werden an der Ausgabestelle mit einem Barcode, welcher den Wert des Tickets repräsentiert, versehen. Um ausschließen zu können, daß diese Wertkarten kopierbar sind, wird der Barcode auf die für optische Licht undurchlässige, schwarze Schichte aufgebracht. Die Ablesung des Barcodes erfolgt mittels eines IR-Lesegerätes, wobei das Lesen des Barcodes dadurch ermöglicht ist, daß die schwarze Schichte, auf welche der Barcode aufgedruckt wurde, für IR-Licht durchlässig ist und unterhalb dieser Schichte die Wertkarte mit einer gegenüber dem Barcode kontrastierenden Fläche ausgebildet ist.

Obgleich derartige bekannte Wertkarten fälschungssicher sind, entsprechen sie deshalb nicht den an sie gestellten Anforderungen, weil die Lesegeräte mit zwei Leseeinrichtungen ausgebildet sein müssen, um die Wertkarten unabhängig davon, in welcher Lage sie in das Lesegerät eingebracht wurden, auswerten zu können und weil durch deren Unterteilung mehrere Wertkarten geschaffen werden können, welche einen Barcode aufweisen. Derartige Teile von Wertkarten können z. B. auf verbrauchte Wertkarten aufgeklebt und derart für Steuerungsvorgänge herangezogen werden.

Der gegenständlichen Erfindung liegt demnach die Aufgabe zugrunde, eine Wertkarte od. dgl., wie ein Ticket, zu schaffen, durch welche die vorstehend angeführten Nachteile vermieden werden. Dies wird erfindungsgemäß dadurch erzielt, daß der Träger aus einem für IR-Licht durchlässigen Material hergestellt ist.

Aufgrund dieser Ausbildung der Wertkarte ist deren Funktion nicht mehr lageabhängig, sondern kann diese vielmehr mittels eines einzigen in einer Lesestation angeordneten Lesegerätes abgelesen werden. Zudem kann mit einer derartigen Wertkarte deshalb nicht manipuliert werden, da bei deren Aufbringung auf eine schon verbrauchte Wertkarte, sowohl der Barcode der verbrauchten Wertkarte als auch der Barcode der neuen Wertkarte abgelesen wird, wodurch eine Fehleranzeige bewirkt wird.

Nach einer bevorzugten Ausführungsform ist der Träger aus einem Material hergestellt, welches sowohl für IR-Licht als auch für optisch wahrnehmbares Licht durchlässig ist. Vorzugsweise befindet sich dabei der Barcode auf der einen Seite Trägers und befindet sich die lichtundurchlässige Schichte auf der anderen Seite des Trägers. Da somit der Barcode auf den Träger selbst aufgebracht werden kann, auf welchem er gut haftet, ist die Gefahr, daß dieser beschädigt wird, geringer, als wenn er auf die schwarze Schichte aufgebracht wird. Hierdurch ist diese Wertkarte weniger störungsanfällig. Weiters kann der Träger in an sich bekannter Weise außerhalb der mit dem Barcode versehenen Fläche mit Werbeaufdrucken versehen sein.

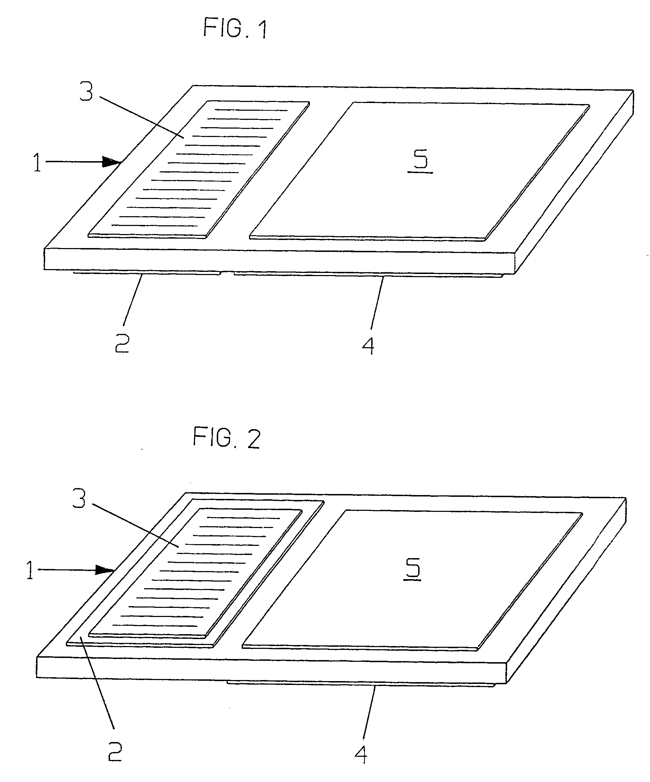

Der Gegenstand der Erfindung ist nachstehend anhand zweier in der Zeichnung dargestellter Ausführungsbeispiele näher erläutert. Die Fig. 1 und 2 zeigen zwei erfindungsgemäße Wertkarten, in axonometrischer Darstellung.

In Fig. 1 ist eine erfindungsgemäße Wertkarte dargestellt, welche aus einem Träger 1 besteht, der aus einem Material gefertigt ist, das für optisch wahrnehmbares Licht und für IR-Licht durchlässig ist. Auf der einen Seite des Trägers 1 ist eine Schichte 2 aufgebracht, welche schwarz ist und welche für IR-Licht durchlässig ist. Auf der anderen Seite des Trägers 1, welche der Schichte 2 gegenüberliegt, ist auf den Träger 1 ein Barcode 3 aufgedruckt.

Da sowohl die Schichte 2 als auch der Barcode 3 schwarz sind und da der Träger 1 für optisch wahrnehmbares Licht durchlässig ist, ist der Barcode nicht kopierbar. Da weiters nicht nur die Schichte 2, sondern auch der Träger 1 für IR-Licht durchlässig ist, kann diese Wertkarte in einer Lesestation mit einem einzigen Lesegerät abgelesen werden, unabhängig davon, in welcher Lage sie in die Lesestation eingebracht wurde. Es muß dabei nur gewährleistet werden, daß in der Lesestation an der dem Lesegerät gegenüber liegenden Seite eine Fläche vorgesehen ist, welche mit dem auf der Wertkarte befindlichen Barcode 3 kontrastiert.

Eine mißbräuchliche Verwendung von Teilen einer erfindungsgemäßen Wertkarte wird dadurch ausgeschlossen, daß sich der Barcode 3 mit dem Barcode einer schon verbrauchten Wertkarte, mit welcher ein Teil einer erfindungsgemäßen Wertkarte kombiniert wird, überlagert, wodurch bei der Ablesung der Wertkarte eine Störung angezeigt wird. Da weiters der Barcode 3 auf den Träger 1 selbst aufgebracht wird, auf welchem er besser haftet als auf der schwarzen Schichte 2, ist die Gefahr einer Beschädigung des Barcodes 3, welche eine Funktionsunfähigkeit der Wertkarte bedingen kann, vermindert.

In Fig. 2 ist eine Ausführungsform dargestellt, bei welcher der Träger 1 gleichfalls aus für IR-Licht durchlässigem Material gefertigt ist, bei welcher jedoch der Barcode 3 auf die Schichte 2 aufgebracht ist. Auch durch diese Ausführungsform werden die Vorteile der Lageunabhängigkeit und der Fälschungssicherheit erzielt. Demgegenüber ist jedoch bei dieser Ausführungsform die verbesserte Haftung des Barcodes 3 nicht erzielt.

Der Träger 1 braucht dabei nicht aus einem für optisches Licht durchlässigen Material hergestellt zu sein.

In den Bereichen des Trägers 1 außerhalb der Schichte 2 bzw. des Barcodes 3 können Werbeaufdrucke 4 und 5 vorgesehen sein. Soferne das Material, aus welchem der Träger 1 gefertigt ist, auch für optisches Licht durchlässig ist, ist ein Werbeaufdruck, welcher auf einer Seite der Wertkarte aufgebracht ist, auch von der anderen Seite der Wertkarte her lesbar bzw. sichtbar.

## Patentansprüche

1. Wertkarte od.dgl., wie Ticket, welche mittels eines IR-Lesegerätes auswertbar ist, bestehend aus einem kartenförmigen Träger aus steifem Material, welcher über zumindest einen Teil einer seiner beiden Seiten mit einem Barcode versehen ist, wobei zumindest derjenige Bereich, in welchem sich der Barcode befindet, mit einer für optisch wahrnehmbares licht undurchsichtigen Schichte versehen ist, dadurch gekennzeichnet, daß der Träger (1) aus einem für IR-Licht durchlässigen Material hergestellt ist.

2. Wertkarte od.dgl. nach Patentanspruch 1, dadurch gekennzeichnet, daß der Träger (1) aus einem Material hergestellt ist, welches sowohl für IR-Licht als auch für optisch wahrnehmbares Licht durchsichtig ist.

3. Wertkarte od.dgl. nach Patentanspruch 2, dadurch gekennzeichnet, daß sich der Barcode (3) auf der einen Seite des Trägers (1) und die lichtundurchlässige Schichte (2) auf der anderen Seite des Trägers (1) befinden.

4. Wertkarte od.dgl. nach einem der Patentansprüche 1 bis 3, dadurch gekennzeichnet, daß der Träger (1) außerhalb der mit dem Barcode (3) versehenen Fläche mit Werbeaufdrucken (4, 5) versehen ist.
